# EUROPÄISCHE PATENTSCHRIFT

(11) **EP 2 274 587 B1**
(45) Veröffentlichungstag und Bekanntmachung des Hinweises auf die Patenterteilung: **03.07.2013**
(21) Anmeldenummer: 09741825.5
(22) Anmeldetag: 27.04.2009
(51) Int. Cl.: G01L 25/00

(54) **KALIBRIERVORRICHTUNG UND KALIBRIERVERFAHREN FÜR EINEN PRÜFSTAND**
CALIBRATION DEVICE AND CALIBRATION METHOD FOR A TEST BENCH
DISPOSITIF ET PROCÉDÉ D'ÉTALONNAGE DESTINÉS À UN BANC D'ESSAI

(30) Priorität: 05.05.2008 DE 102008022088
(43) Veröffentlichungstag der Anmeldung: 19.01.2011
(73) Patentinhaber: HORIBA Europe GmbH, 64293 Darmstadt (DE)
(72) Erfinder: BORMANN, Jens, 64331 Weiterstadt (DE); PÄTSCHKE, Klaus, 68642 Bürstadt (DE); REICHEL, Ulrich, 69469 Weinheim (DE)
(74) Vertreter: Müller - Hoffmann & Partner
(86) Internationale Anmeldenummer: PCT/EP2009/003053
(87) Internationale Veröffentlichungsnummer: WO 2009/135606

(56) Entgegenhaltungen:
- WO-A-98/37394
- DE-U1- 20 012 772
- JP-A- 2007 147 345
- ANONYMOUS: ""Guidelines on the Calibration of Static Torque Measuring Devices", EURAMET/cg-14/v.01 (previously EA-10/14)"[Online] Juli 2007 (2007-07), XP002537699 Gefunden im Internet: URL:http://www.euramet.org/index.php?id=ca libration-guides> [gefunden am 2007-07-17]
- WEGENER ET AL: "Measurement uncertainty of torque measurements with rotating torque transducers in power test stands" MEASUREMENT, INSTITUTE OF MEASUREMENT AND CONTROL. LONDON, GB, Bd. 40, Nr. 7-8, 26. August 2007 (2007-08-26), Seiten 803-810, XP022243394 ISSN: 0263-2241

## Beschreibung

Die Erfindung betrifft eine Kalibriervorrichtung und ein Kalibrierverfahren für einen Prüfstand.

Auf einem Rollenprüfstand werden Fahrzeuge in bestimmten Fahrzyklen geprüft. Dabei soll insbesondere das Antriebs- und Bremsverhalten eines Fahrzeugs ermittelt werden. Die zu regelnden Größen sind der Fahrwiderstand und die Massenträgheit des Prüffahrzeugs.

Ein üblicher Rollenprüfstand weist zwei Rollen mit großem Durchmesser auf, auf die die Räder des Fahrzeugs aufgestellt werden können. Die Rollen sind axial zueinander angeordnet, wobei zwischen den beiden Rollen ein Dynamometer angeordnet ist. Das Dynamometer ist meist als Elektromotor ausgebildet und dient als Last für die Antriebsräder des Fahrzeugs oder - im Falle eines Schubbetriebs - als Antrieb für die Antriebsräder.

Die für das Fahrverhalten des Fahrzeugs maßgebliche Beschleunigungskraft liegt am Reifen- bzw. Rollendurchmesser an. Sie kann mit Hilfe eines Kraftaufnehmers gemessen werden, der von einer Momentenstütze des pendelnd gelagerten Dynamometers beaufschlagt wird. Somit wird das Motormoment, das von den Fahrzeugreifen auf die Rollen aufgebracht wird, schließlich an der Momentenstütze abgestützt, die ihrerseits eine Zug- oder Druckkraft auf den Kraftaufnehmer ausübt.

Als Kraftaufnehmer wird üblicherweise eine Kraftmessdose verwendet, bei der jedoch mit der Zeit eine Verschiebung des Nullpunktes und eine Änderung der Empfindlichkeit des Kraftsignals auftreten kann. Zum Ausgleich dieser Veränderung ist ein regelmäßiges Kalibrieren erforderlich. Das dabei angewandte Kalibrierverfahren muss gesetzliche Vorgaben erfüllen.

Wenn ein Prüfstand in Betrieb genommen wird, wird zunächst der Kraftaufnehmer justiert. Bei der Justage wird jedem Ausgangssignal der Kraftmessdose ein Kraftwert zugeordnet. Üblich ist eine sogenannte 3-Punkt-Justage, bei der aus dem gesamten Messbereich der Kraftmessdose drei Justagepunkte ausgewählt werden, zum Beispiel jeweils ein Justagepunkt am Anfang, in der Mitte und am Ende des Messbereichs. Die Justage erfolgt mit Hilfe einer Kalibriervorrichtung.

Nach dem Justieren des Prüfstands muss die Justage durch Kalibrieren überprüft werden. Während die Justage - wie oben beschrieben - lediglich mit Hilfe von drei definierten Punkten erfolgt, mit denen der Messbereich eingestellt wird, sind bei der Kalibrierung gemäß internationaler Richtlinien mindestens zehn Messpunkte zu überprüfen. Die Messpunkte werden dadurch generiert, dass mit Hilfe der Kalibriervorrichtung jeweils eine unterschiedliche, vorgegebene und präzise gegebene Last in geeigneter Weise auf die Kraftmessdose ausgeübt wird. Das Messsignal der Kraftmessdose kann dann mit der vorbekannten Last verglichen werden. Dabei wird die Abweichung der zehn Messpunkte von der ursprünglichen 3-Punkt-Justage ausgewertet (Wiederholgenauigkeit, Hysterese, Remanenz). Der festgestellte Fehler muss schriftlich festgehalten werden. Überschreitet der Fehler eine festgelegte Größe, muss der Prüfstand neu justiert werden.

Bei dem Kalibriervorgang muss die Kraftmessdose gleichermaßen mit Zug- und mit Druckkräften beaufschlagt werden, was einen Umbau der Kalibriervorrichtung erforderlich macht.

Aus der WO 98/37394 ist eine Kalibriervorrichtung bekannt, bei der Kalibriergewichte an einer Haltevorrichtung angeordnet sind. Diese Haltevorrichtung senkt sich langsam auf einen Kalibrierhebel ab, wobei die Gewichte paarweise an den Kalibrierhebel übergeben werden.

Aus der JP 2001-228041 ist eine Kalibriervorrichtung bekannt, bei der die Last beim Kalibrieren nicht durch ein Gewicht, sondern durch einen Hydraulikzylinder aufgebracht wird.

Aus der JP 2007147345 A ist eine Kalibriervorrichtung mit einem Hebelelement bekannt, an dessen einem Ausleger eine Gewichtsaufnahme und an dessen anderem Ende eine Verbindungseinrichtung zu einer Lasteinrichtung eines Prüfstands vorgesehen ist.

In der DE 200 12 772 U 1 wird eine Drehmoment-Kalibriervorrichtung beschrieben, bei der ebenfalls ein Hebelelement vorgesehen ist, das auf einer Seite durch eine Gewichtsaufnahme und auf der gegenüberliegenden Seite durch eine Verbindungseinrichtung zu einer Lasteinrichtung eines Prüfstands belastet wird.

Der Erfindung liegt die Aufgabe zugrunde, eine Kalibriervorrichtung und ein Kalibrierverfahren anzugeben, mit denen ein Prüfstand mit der erforderlichen Präzision und Vollständigkeit (Wiederholgenauigkeit, Hysterese, Remanenz) kalibriert werden kann, ohne dass der Prüfbetrieb für längere Zeit unterbrochen werden oder durch einen Bediener aufwändige Maßnahmen zu ergreifen sind.

Die Aufgabe wird durch eine Kalibriervorrichtung nach Anspruch 1 und durch Kalibrierverfahren nach den Ansprüchen 12 und 14 gelöst.

Eine Kalibriervorrichtung für einen Prüfstand ist mit zwei Hebeleinrichtungen ausgestattet, wobei jede Hebeleinrichtung aufweist: ein um eine Drehachse verschwenkbares Hebelelement, eine an einem Ende des Hebelelements vorgesehene Gewichtsaufnahme, auf der unterschiedliche Gewichtslasten anbringbar sind, und eine an einem dem einen Ende bezüglich der Drehachse gegenüberliegenden anderen Ende des Hebelelements vorgesehene Verbindungseinrichtung zum Verbinden des Hebelelements mit einer Lasteinrichtung des Prüfstands. Dabei sind die Hebelelemente derart angeordnet, dass die Gewichtsaufnahme des einen Hebelelements bezüglich einer Mittelebene der Kalibriervorrichtung auf einer Seite angeordnet ist und die Gewichtsaufnahme des anderen Hebelelements bezüglich der Mittelebene auf der anderen Seite angeordnet ist.

Dadurch, dass zwei Gewichtsaufnahmen vorgesehen sind, die auf gegenüberliegenden Seiten der Kalibriervorrichtung vorgesehen sind, ist es möglich, die für den Kalibriervorgang erforderlichen Zug- und Druckkräfte zu erzeugen, ohne einen aufwändigen Umbau der Kalibriervorrichtung vornehmen zu müssen. Vielmehr ist es möglich, durch Auflegen von entsprechenden Gewichtslasten auf der jeweiligen Gewichtsaufnahme am anderen Ende des Hebels eine entsprechend Kraft zu erzeugen, die dann über die Verbindungseinrichtung auf die Lasteinrichtung des Prüfstands übertragen werden kann.

Als Lasteinrichtung des Prüfstands, der als solcher nicht Gegenstand von Anspruch 1 ist, kann ein an sich bekannter Dynamometer verwendet werden, an dem seitlich zwei gegenüberliegende Befestigungsmittel vorgesehen sind, die über eine jeweilige Verbindungseinrichtung mit der Kalibriervorrichtung verbunden werden können.

Da zwei Verbindungseinrichtungen vorgesehen sind, können die Verbindungseinrichtungen auf gegenüberliegenden Seiten des Dynamometers verbunden werden, sodass Drehmomente in beiden Richtungen um eine Hauptachse des Dynamometers erzeugt werden können.

Die Hebeleinrichtungen können im Wesentlichen identisch aufgebaut sowie spiegelsymmetrisch und versetzt zueinander angeordnet sein. Dadurch ist eine einfache, kostengünstige Herstellung der Kalibriervorrichtung möglich.

Weiterhin ist es möglich, dass die Hebelelemente der Hebeleinrichtungen zueinander parallel ausrichtbar sind. Je nach Ausführungsform aber können die Hebelelemente auch winklig zueinander stehen, um zum Beispiel zu erreichen, dass die Verbindungseinrichtungen, die zu den Kragarmen des Dynamometers geführt werden sollen, auf einer gemeinsamen Ebene zu liegen kommen, die senkrecht zu der Haupt- bzw. Drehachse des Dynamometers steht.

Da die Kalibriervorrichtung für die beiden Hebelelemente jeweils eine eigene Drehachse aufweist, folglich also insgesamt zwei Drehachsen vorhanden sind, besitzt sie eine erhöhte Stabilität gegenüber Vibrationen aus der Umgebung. Würde die Kalibriervorrichtung dagegen lediglich aus einem einzelnen Hebelelement mit nur einer Drehachse bestehen, wäre eine erhöhte Vibrationsempfindlichkeit gegeben. Dadurch könnte das Hebelelement in eine Pendelschwingung geraten und Störsignale erzeugen.

Die Hebelelemente können jeweils horizontal ausrichtbar sein. Das ist hilfreich, um einen Fehlereinfluss aufgrund einer Winkelstellung eines jeweiligen Hebelelements auszuschließen. Aufgrund der enorm hohen Anforderungen an die Genauigkeit der Kalibrierung kann bereits eine geringfügige Auslenkung des Hebelelements bezüglich der Horizontalen zu einem veränderten Hebelarm bezüglich der Drehachse des Hebelelements führen, was eine - wenn auch nur geringfügig veränderte - Kraftwirkung zur Folge hat.

Das eine Ende des Hebelelements kann weiter von der Drehachse entfernt sein als das andere Ende. An dem einen Ende ist - wie oben angegeben - die Gewichtsaufnahme vorgesehen, während an dem anderen Ende die Verbindungseinrichtung angeordnet ist. Somit kann aufgrund des längeren Hebelarms zum einem Ende bereits eine relativ geringe Gewichtslast auf der Gewichtsaufnahme eine deutlich höhere Last erzeugen, die durch die Verbindungseinrichtung auf die Lasteinrichtung des Prüfstands übertragen wird.

Beide Drehachsen können auf einem gemeinsamen Tragrahmen angeordnet sein. Dadurch lässt sich die Kalibriervorrichtung als eine Einheit bewegen und auf den Prüfstand aufsetzen.

Die Gewichtsaufnahme kann über eine Drehachse relativ zu dem Hebelelement verschwenkbar sein. Ebenso kann die Verbindungseinrichtung über eine Drehachse relativ zu dem Hebelelement verschwenkbar sein. Dabei können die auf dem Tragrahmen angeordnete Drehachse, die Drehachse der Gewichtsaufnahme und die Drehachse der Verbindungseinrichtung in einer gemeinsamen Ebene liegen. Da somit alle relevanten Drehachsen auf einer gemeinsamen Ebene angeordnet sind, können Messfehler, die sich bei einem Verschwenken des Hebelelements ergeben, weitgehend ausgeschlossen werden.

Die Gewichtsaufnahme kann einen Teller aufweisen, auf dem Gewichte bzw. Gewichtssteine auflegbar sind. Damit ist es für den Bediener sehr einfach, beim Kalibrieren die jeweils erforderlichen Gewichte auf der Gewichtsaufnahme aufzubringen.

Die Verbindungseinrichtung kann ein sich im Wesentlichen senkrecht nach unten erstreckendes stabförmiges Element aufweisen. Da die Kalibriervorrichtung in der Regel oberhalb des Prüfstands aufgesetzt wird, ist es erforderlich, die von der Kalibriervorrichtung erzeugte Last an den Messaufnehmer des Prüfstands zu führen. Dies kann mit Hilfe der sich senkrecht nach unten erstreckenden Elemente erfolgen.

Die Länge der Verbindungseinrichtung kann veränderbar sein, um ein horizontales Ausrichten der beiden Hebelelemente zu ermöglichen. Zum Beispiel kann in der Verbindungseinrichtung ein Einstellgewinde vorgesehen sein, um die Länge zu verändern. Für ein präzises Kalibrieren ist es zweckmäßig, vor Beginn des Kalibriervorgangs die beiden Hebelelemente exakt horizontal auszurichten, um eventuelle Störeinflüsse zu minimieren.

Die Mittelebene der Kalibriervorrichtung kann mit einer Mittelebene des Prüfstands bei einem Aufsetzen der Kalibriervorrichtung auf den Prüfstand in Überdeckung gebracht werden. Die Mittelebene der Kalibriervorrichtung stellt eine Art Symmetrieebene dar, ohne dass es dabei auf eine exakte Achsen-, Punkt- oder Spiegelsymmetrie ankommt. Ein gutes Ausrichten der Kalibriervorrichtung auf den Prüfstand ist jedoch erforderlich, um einen ordnungsgemäßen Kalibriervorgang durchführen zu können.

Die Kalibriervorrichtung kann derart auf dem Prüfstand aufgebaut werden, dass eine Drehachse eines zu der Lasteinrichtung des Prüfstands gehörenden Dynamometers in der Mittelebene der Kalibriervorrichtung liegt.

Die Verbindungseinrichtungen der beiden Hebeleinrichtungen können bezüglich der Mittelebene auf verschiedenen Seiten angeordnet sein und mit an dem Dynamometer auf gegenüberliegenden Seiten vorgesehenen Befestigungsmitteln verbindbar sein. Somit können die Verbindungseinrichtungen ebenso wie die Gewichtsaufnahmen auf unterschiedlichen Seiten der Mittelebene der Kalibriervorrichtung angeordnet sein.

Als Befestigungsmittel können z.B. Befestigungsbänder, z.B. aus Stahl, dienen, die seitlich an dem Gehäuse des Dynamometers dauerhaft befestigt sind. Die Befestigungsbänder können bei Bedarf in die Verbindungseinrichtungen der Kalibriervorrichtung eingehängt werden, um die Verbindung zwischen der Kalibriervorrichtung und dem Prüfstand zu schaffen.

Weiterhin wird ein Kalibrierverfahren angegeben zum Kalibrieren eines Prüfstands mit einer wie oben beschriebenen Kalibriervorrichtung, mit den Schritten:
a) Durchführen eines Startverfahrens mit den Schritten:
   - Anbringen von Gewichten auf einer der Gewichtsaufnahmen der Kalibriervorrichtung bis zum Erreichen eines vorgegebenen Nenn-Gewichtswertes;
   - Entfernen der Gewichte von der Gewichtsaufnahme;
   - Anbringen von Gewichten auf der anderen Gewichtsaufnahme der Kalibriervorrichtung bis zum Erreichen des vorgegebenen Nenn-Gewichtswertes;
   - Entfernen der Gewichte von der Gewichtsaufnahme;
   - erneutes Anbringen von Gewichten auf der einen Gewichtsaufnahme bis zum Erreichen des vorgegebenen Nenn-Gewichtswertes;
   - Entfernen der Gewichte von der Gewichtsaufnahme;
   - erneutes Anbringen von Gewichten auf der anderen Gewichtsaufnahme bis zum Erreichen des vorgegebenen Nenn-Gewichtswertes;
   - Entfernen der Gewichte von der Gewichtsaufnahme;
   und
b) Durchführen einer Kalibrierung mit den Schritten:
   - nacheinander Anbringen und Entfernen von verschiedenen Gewichten entsprechend einer durch eine Steuereinrichtung vorgegebenen Reihenfolge zum Erzeugen von unterschiedlichen Gewichtslasten auf der einen Gewichtsaufnahme, währenddessen Messen einer von der Kalibriervorrichtung auf den Prüfstand ausgeübten Last und Vergleichen der gemessenen Last mit der durch die Gewichtslasten vorgegebenen Last;
   - nacheinander Anbringen und Entfernen von verschiedenen Gewichten entsprechend einer durch die Steuereinrichtung vorgegebenen Reihenfolge zum Erzeugen von unterschiedlichen Gewichtslasten auf der anderen Gewichtsaufnahme, währenddessen Messen einer von der Kalibriervorrichtung auf den Prüfstand ausgeübten Last und Vergleichen der gemessenen Last mit der durch die Gewichtslasten vorgegebenen Last.

Während des Startverfahrens werden verschiedentlich Gewichte aufgelegt und wieder heruntergenommen, damit sich die Mechanik der Kalibriervorrichtung und die Messkette einspielen können und hinsichtlich der Be- und Entlastung eine weitgehend konstante Hysterese einnehmen. Erst danach folgt die eigentliche Kalibrierung, die mit Hilfe eines Bedienrechners (Steuereinrichtung) durchgeführt wird. Dabei wird der Bediener angeleitet, bestimmte vorgegebene Gewichte in vorgegebener Reihenfolge auf die Gewichtsaufnahmen der Kalibriervorrichtung aufzulegen und wieder zu entnehmen.

Während des Kalibrierverfahrens werden nacheinander Gewichte auf beide Gewichtsaufnahmen aufgelegt und wieder abgenommen. Dadurch können nacheinander zunächst unterschiedliche Druckkräfte und danach unterschiedliche Zugkräfte (bzw. umgekehrt) auf die Kraftmesseinrichtung des Prüfstands ausgeübt werden. Die dabei festgestellten Messsignale werden mit den jeweils aufgelegten Gewichtslasten verglichen. Dabei darf ein vorgegebener Fehler nicht überschritten werden.

Bei einem anderen Kalibrierverfahren sind die folgenden Schritte vorgesehen:
a) Durchführen eines Startverfahrens mit den Schritten:
   - Anbringen von Gewichten auf beiden Gewichtsaufnahmen der Kalibriervorrichtung bis zum Erreichen eines vorgegebenen Mittel-Gewichtswertes auf beiden Gewichtsaufnahmen;
   - Austarieren der Kalibriervorrichtung;
   - Hinzufügen weiterer Gewichte auf einer der Gewichtsaufnahmen bis zum Erreichen eines vorgegebenen Nenn-Gewichtswertes;
   - Entfernen der Gewichte von der einen Gewichtsaufnahme;
   - erneutes Anbringen von Gewichten auf der einen Gewichtsaufnahme bis zum Erreichen des vorgegebenen Nenn-Gewichtswertes;
   - Entfernen der Gewichte von einen Gewichtsaufnahme;
   und
b) Durchführen einer Kalibrierung mit den Schritten:
   - nacheinander Anbringen und Entfernen von verschiedenen Gewichten entsprechend einer durch eine Steuereinrichtung vorgegebenen Reihenfolge zum Erzeugen von unterschiedlichen Gewichtslasten auf der einen Gewichtsaufnahme, währenddessen Messen einer von der Kalibriervorrichtung auf den Prüfstand ausgeübten Last und Vergleichen der gemessenen Last mit der durch die Gewichtslasten vorgegebenen Last.

Dieses zweite Kalibrierverfahren unterscheidet sich von dem oben beschriebenen ersten Kalibrierverfahren dadurch, dass lediglich auf einer Seite der Kalibriervorrichtung, also bei nur einer der Gewichtsaufnahmen die Last verändert werden muss, sodass der Bediener nicht die Gewichte von einer Seite zur anderen Seite tragen muss. Dazu wird vor Beginn des Kalibrierens ein bestimmter Stapel von Kalibriergewichten auf jeder Seite der Kalibriervorrichtung aufgelegt. Das System wird austariert. Dann wird auf der bevorzugten, für den Bediener bequemer zugänglichen Seite die gleiche Masse zusätzlich hinzugefügt bzw. die gesamte Masse entfernt.

Auf diese Weise wird - wie bei den ersten Kalibrierverfahren - ebenfalls schrittweise der Kraftaufnehmer bis zu seiner Nennlast belastet bzw. entlastet. Der Bediener muss jedoch auf die andere Gewichtsaufnahme keine weiteren Gewichte auflegen bzw. Gewichte entnehmen.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: eine Kalibriervorrichtung in Perspektivansicht;
- **Fig. 2**: die Kalibriervorrichtung in Seitenansicht im Einbauzustand in einem Prüfstand;
- **Fig. 3**: eine Teilansicht des Prüfstands in Perspektivdarstellung; und
- **Fig. 4**: ein Last-Kraftsignal-Diagramm zur Erläuterung eines Kalibrierverfahrens.

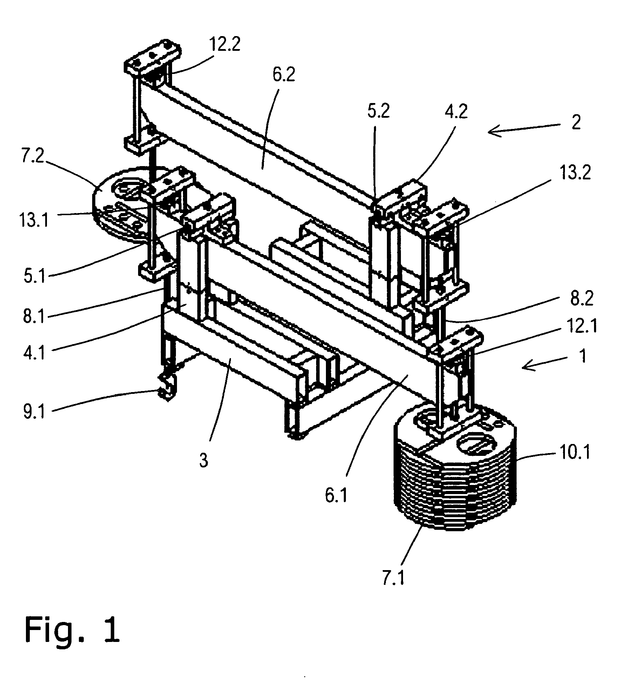

Fig. 1 zeigt in Perspektivdarstellung den Aufbau einer Kalibriervorrichtung.

Zwei Hebeleinrichtungen 1 und 2 sind parallel zueinander, jedoch gespiegelt auf einem Tragrahmen 3 angeordnet.

Die Hebeleinrichtungen 1, 2 sind identisch aufgebaut, sodass sie nachfolgend teilweise mit gleichen Bezugszeichen gekennzeichnet werden können. Sofern jedoch erforderlich, wird durch einen nachgestellten Suffix .1 und .2 klargestellt, ob das jeweilige Bauelement zu der ersten Hebeleinrichtung 1 (.1) oder zu der zweiten Hebeleinrichtung 2 (.2) gehört. Als erste Hebeleinrichtung soll die in Fig. 1 gezeigte vordere Hebeleinrichtung 1 gelten, während die hintere Hebeleinrichtung 2 die zweite Hebeleinrichtung bildet.

Die erste Hebeleinrichtung 1 weist eine auf dem Tragrahmen 1 aufgebaute Lagerstütze 4.1 auf, die ein Lager für eine Drehachse 5.1 trägt.

Um die Drehachse 5.1 ist ein Hebelelement 6.1 verschwenkbar gelagert.

An dem äußeren, längeren Ende des Hebelelements 6.1 ist eine Gewichtsaufnahme 7.1 angebracht, während an dem kürzeren Ende des Hebelelements 6.1 eine Verbindungseinrichtung 8.1 in Form eines sich senkrecht nach unten erstreckenden stabförmigen Elements vorgesehen ist.

Am Ende der Verbindungseinrichtung 8.1 ist ein Haken 9.1 angebracht, dessen Funktion später noch erläutert wird.

Die Gewichtsaufnahme 7.1 ist über eine Drehachse 12.1 relativ verschwenkbar zu dem Hebelelement 6.1. Dadurch wird sichergestellt, dass die Gewichtsaufnahme 7.1 stets senkrecht nach unten ausgerichtet ist.

Analog dazu ist die Verbindungseinrichtung 8.1 über eine Drehachse 13.1 relativ zu dem Hebelelement 6.1 verschwenkbar.

Die Drehachsen 5.1, 12.1 und 13.1 können in Form von Schneidenlagerungen ausgebildet sein. Sie müssen lediglich eine Verschwenkung in einem relativ begrenzten Winkelbereich zulassen.

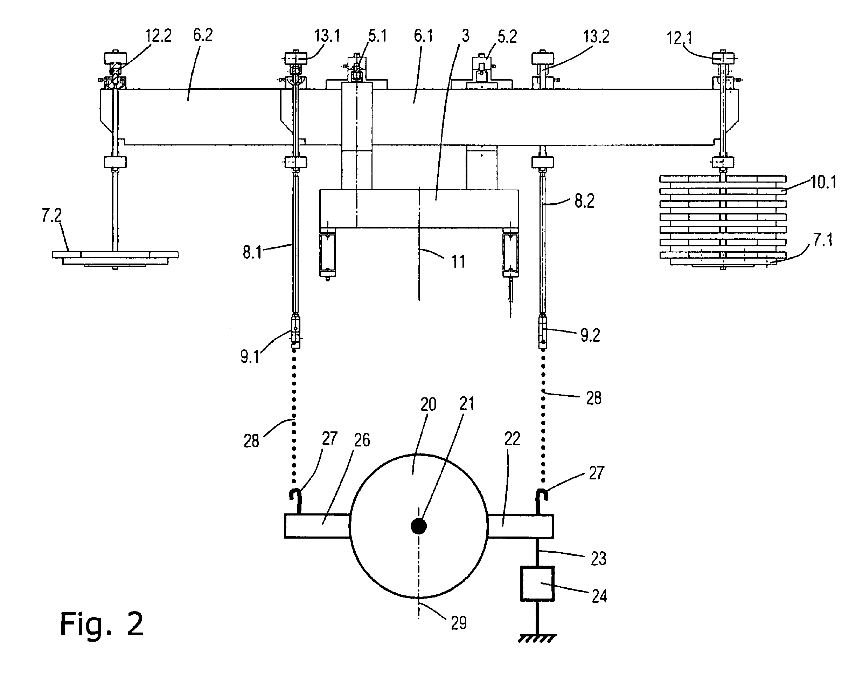

Die Drehachsen 5.1, 12.1 und 13.1 liegen in einer gemeinsamen Ebene, wie später auch in Fig. 2 gezeigt.

Der Aufbau der zweiten Hebeleinrichtung 2 ist - wie gesagt - identisch zu dem der ersten Hebeleinrichtung 1. Demgemäß weist die Hebeleinrichtung 2 eine Lagerstütze 4.2, ein um eine Drehachse 5.2 verschwenkbares Hebelelement 6.2, eine Gewichtsaufnahme 7.2 und eine Verbindungseinrichtung 8.2 auf. Die Verbindungseinrichtung 8.2 trägt einen Haken 9.2, der jedoch in Fig. 1 nicht sichtbar ist.

Auch die zweite Hebeleinrichtung 2 weist eine Drehachse 12.2 zwischen der Gewichtsaufnahme 7.2 und dem Hebelelement 6.2 sowie eine Drehachse 13.2 zwischen der Verbindungseinrichtung 8.2 und dem Hebelelement 6.2 auf. Auch diese Drehachsen liegen in einer gemeinsamen Ebene.

Wie in Fig. 1 erkennbar, bewirkt ein Auflegen von Gewichten 10.1 auf die Gewichtsaufnahme 7.1, dass eine erhöhte Kraft von der Verbindungseinrichtung 8.1 auf den Haken 9.1 übertragen wird. Die Gewichtsaufnahme 7.2 der zweiten Hebeleinrichtung 3 hingegen ist in dem in Fig. 1 dargestellten Zustand entlastet.

Fig. 2 zeigt die Kalibriervorrichtung von Fig. 1 in Seitenansicht von vorne. Zudem ist unterhalb der Kalibriervorrichtung schematisch ein Teil des Prüfstands dargestellt, der mit Hilfe der Kalibriervorrichtung kalibriert werden soll.

Unterhalb der Kalibriervorrichtung ist ein sogenannter Dynamometer 20 vorgesehen. Als Dynamometer kann ein Elektromotor, der gegebenenfalls motorisch oder generatorisch betrieben wird, eingesetzt werden. Dynamometer sind in vielfältigen Ausführungsformen bekannt.

Der Dynamometer ist in bekannter Weise pendelnd gelagert und somit um seine Hauptachse 21 frei drehbar.

Zur Drehmomentabstützung ist ein erster Hebelarm 22 an dem Gehäuse des Dynamometers angebracht. Der erste Hebelarm 22 wirkt über eine geeignete Kopplung 23 auf eine Kraftmessdose 24, die ihrerseits auf Druck und Zug belastbar ist.

Die Kalibriervorrichtung dient letztlich zum Kalibrieren dieser Kraftmessdose 24.

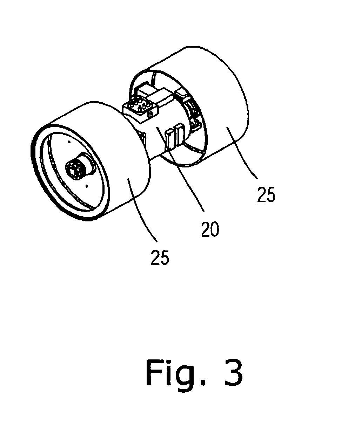

Fig. 3 zeigt in vereinfachter Teilansicht perspektivisch den Dynamometer 20, der in dem Prüfstand zwischen zwei Rollen 25 eingebaut wird.

Auf die Rollen 25 werden die Räder eines Kraftfahrzeugs aufgestellt. Je nach Prüfprogramm können die Fahrzeugräder die Rollen 25 antreiben, sodass der Dynamometer 20 generatorisch betrieben wird, oder aber kann auch der Dynamometer 20 motorisch betrieben werden und über die Rollen 25 die Fahrzeugräder drehen, um das Bremsverhalten des Fahrzeugs zu prüfen (Schubbetrieb).

Die dabei entstehenden Momente werden über den ersten Hebelarm 22 am Gehäuse des Dynamometers 20 aufgenommen, und an der Kraftmessdose 24 abgestützt.

Wie Fig. 2 zeigt, ist gegenüber von dem ersten Hebelarm 22 ein zweiter Hebelarm 26 angebracht. Jeder der Hebelarme 22, 26 trägt einen Motorhaken 27.

Zum Kalibrieren wird zunächst die Kalibriervorrichtung mit dem Tragrahmen 3 auf den Prüfstand aufgesetzt. Danach werden die Haken 9.1 und 9.2 mit Hilfe von als Befestigungselemente dienenden Befestigungsbändern 28 mit den Motorhaken 27 verbunden.

Anstelle der Haken 9.1 und 9.2 können auch andere Befestigungsmittel vorgesehen werden, mit denen die Verbindungseinrichtungen 8.1 und 8.2 mit den Befestigungsbändern 28 verbunden werden können.

Die Hebelarme 22 und 26 können in der Praxis sehr kurz ausgebildet sein. Dabei ist es auch möglich, dass die Befestigungsbänder 28 direkt außen an dem Gehäuse des Dynamometers 20 angeschraubt werden. Der durch das Gehäuse bereits vorgegebene Hebelarm um die Drehachse 21 reicht aus, um ein entsprechendes Moment zu erzeugen.

Wie insbesondere aus Fig. 2 erkennbar, überdecken sich eine Mittelebene 11 der Kalibriervorrichtung und eine Mittelebene 29 des Prüfstands. Die Hauptachse 21 des Dynamometers 20 liegt dabei in der Mittelebene 29 des Prüfstands.

Durch diesen Aufbau kann folgendes erreicht werden:

Die Gewichte 10.1 auf der als Gewichtsteller ausgebildeten Gewichtsaufnahme 7.1 verschwenken das Hebelelement 6.1 um die Drehachse 5.1 und ziehen das Hebelelement 6.1 auf der rechten Seite von Fig. 2 herunter, wodurch auf der gegenüberliegenden Seite des Hebelelements 6.1 eine nach oben gerichtete Kraft in der Verbindungseinrichtung 8.1 entsteht. Diese nach oben gerichtete Zugkraft wird über den Haken 9.1, das Befestigungsband 28 und den Motorhaken 27 auf den zweiten Hebelarm 26 übertragen, wodurch ein Drehmoment um die Hauptachse 21 des Dynamometers 20 erzeug wird. Dieses Drehmoment wird über den ersten Hebelarm 22 auf der Kraftmessdose 24 abgestützt und erzeugt dort eine Druckkraft.

Wenn nun die Gewichte 10.1 von der Gewichtsaufnahme 7.1 heruntergenommen und stattdessen auf die Gewichtsaufnahme 7.2 der zweiten Hebeleinrichtung 2 aufgelegt werden, wird einerseits die Verbindungseinrichtung 8.1 entlastet, aber andererseits die Verbindungseinrichtung 8.2 durch eine Zugkraft nach oben belastet. Diese Zugkraft wird wiederum über den Haken 9.2, das Befestigungsband 28 und den Motorhaken 27 auf den ersten Hebelarm 22 und damit wieder auf die Kraftmessdose 24 übertragen. Diesmal wirkt eine Zugkraft auf die Kraftmessdose 24.

Somit können durch wechselweises Be- und Entlasten der Gewichtsaufnahmen 7.1 und 7.2 unterschiedliche Zug- und Druckkräfte auf der Kraftmessdose 24 wirken. Wenn dabei jeweils genau vorgegebene Massen bzw. Gewichte auf die Gewichtsaufnahmen 7.1 und 7.2 aufgelegt werden, steht fest, welche Kraft die Kraftmessdose 24 im Idealfall, bei einer 100 % genauen Arbeitsweise messen müsste. Der schließlich tatsächlich von der Kraftmessdose 24 erfasste Kraftwert kann davon abweichen, sodass die Kraftmessdose 24 neu justiert werden muss.

Die Befestigungsbänder 28 können - wie oben bereits erläutert - direkt am Gehäuse des Dynamometers 20 seitlich festgeschraubt werden. Dabei können die Befestigungsbänder 28 so stabil sein, dass sie selbsttragend sind. Zudem ist es möglich, am oberen Ende der Befestigungsbänder 28 eine in den Figuren nicht gezeigte Arretiervorrichtung vorzusehen, an der die Befestigungsbänder 28 im normalen Betriebszustand gehalten werden können, wenn sie nicht mit den Haken 9.1 und 9.2 der Kalibriervorrichtung verbunden sind. Lediglich während der Phase der Kalibrierung gibt die Arretiervorrichtung die Befestigungsbänder 28 frei.

Dies hat den Vorteil, dass es für den Bediener nicht erforderlich ist, in die Grube herabzusteigen, in der üblicherweise der Prüfstand aufgebaut ist, wenn eine Kalibrierung durchgeführt werden soll. Vielmehr kann der Bediener die Kalibriervorrichtung oben auf den Prüfstand aufsetzen und auch von oben die Befestigungsbänder 28 aus der Arretiervorrichtung lösen und mit den Haken 9.1 und 9.2 bzw. mit den Verbindungseinrichtungen 8.1 und 8.2 verbinden. Der Bediener kann also sämtliche Handlungen von oben, an der oberen Öffnung der Grube durchführen, ohne in die Grube herabsteigen zu müssen.

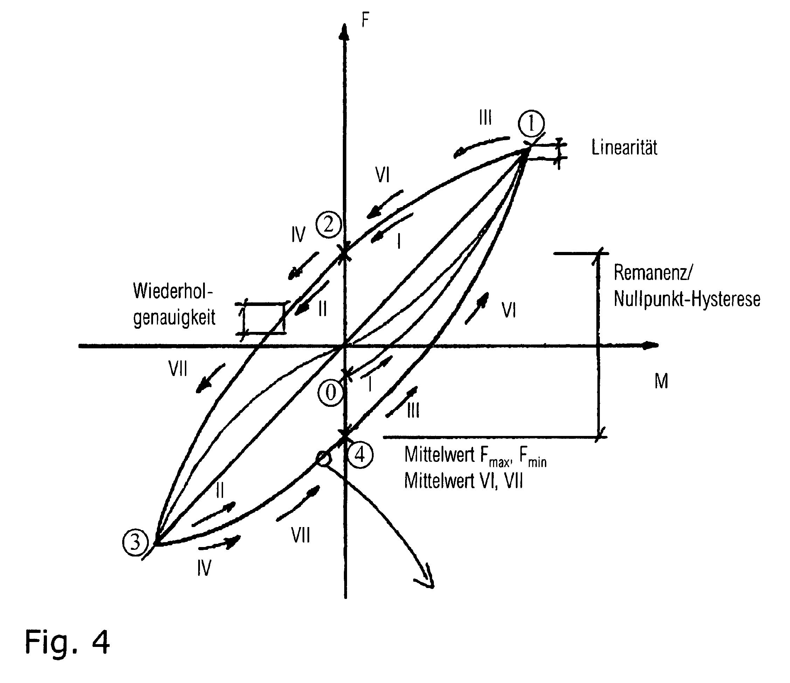

Nachfolgend wird anhand von Fig. 4 ein Kalibrierverfahren beschrieben:

Fig. 4 zeigt in einem Koordinatensystem das von der Kraftmessdose 24 gemessene Kraftsignal F aufgetragen über dem tatsächlich an dem Dynamometer 20 wirkenden Moment M, welches durch die an der Kalibriervorrichtung aufliegenden Gewichte 10.1 und 10.2 hervorgerufen wird. Die positiven Kraftwerte in Fig. 4 (Ordinate) stellen Druckkräfte her, während die negativen Kraftwerte Zugkräfte sind.

Zunächst ist ein Startverfahren durchzuführen, um die gesamte Mechanik aufeinander einzuspielen und gegebenenfalls durch längeren Betriebsstillstand hervorgerufene Haftreibungen aufzuheben.

Ausgangspunkt ist der in Fig. 4 gekennzeichnete Punkt 0, bei dem kein Drehmoment an dem Dynamometer 20 anliegt, aber dennoch ein bestimmtes Kraftsignal von der Kraftmessdose 24 erzeugt wird. Dazu ist anzumerken, dass der Nullpunkt in aller Regel nie exakt eingehalten werden kann. Vielmehr verschiebt sich der Nullpunkt ständig innerhalb von allerdings sehr engen Grenzen. Die Darstellung von Fig. 4 ist daher stark übertrieben, um das Kalibrierverfahren zu verdeutlichen.

Im Punkt 0 werden auf die Gewichtsaufnahme 7.1 der ersten Hebeleinrichtung 1 Gewichte aufgelegt, bis eine Nennlast mit einem Nenn-Gewichtswert erreicht ist (Schritt I entsprechend Verbindungslinie I von Punkt 0 bis zu Punkt 1 in Fig. 4).

Danach werden die Gewichte vollständig heruntergenommen, woraufhin über die Verbindungslinie I Punkt 2 in dem Diagramm von Fig. 4 erreicht wird. Dies zeigt, dass jetzt der Nullpunkt vom ursprünglichen Punkt 0 zum jetzt aktuellen Punkt 2 verschoben wurde, obwohl in beiden Betriebszuständen jeweils keine Last bzw. Moment auf den Dynamometer 20 ausgeübt wurde.

Nachfolgend werden auf die Gewichtsaufnahme 7.2 der zweiten Hebelvorrichtung 3 Gewichte aufgelegt, bis die Nennlast bzw. der Nenn-Gewichtswert erreicht ist (Schritt II entsprechend Verbindungslinie II von Punkt 2 zu Punkt 3).

Auch diese Gewichte werden wieder vollständig heruntergenommen, sodass über die Verbindungslinie II Punkt 4 erreicht wird. Jetzt hat also eine Nullpunktverschiebung vom Punkt 2 zu Punkt 4 stattgefunden.

Nachfolgend werden die gleichen Schritte nochmals wiederholt: Auflegen von Gewichten auf die Gewichtsaufnahme 7.1 der ersten Hebelvorrichtung 2 (Schritt III, Verbindungslinie III von Punkt 4 zu Punkt 1); vollständiges Herunternehmen der Gewichte (Schritt III, Verbindungslinie III von Punkt 1 zu Punkt 2); Auflegen von Gewichten auf der Gewichtsaufnahme 7.2 der zweiten Hebeleinrichtung 3 (Verbindungslinie IV von Punkt 2 zu Punkt 3); vollständiges Herunternehmen der Gewichte (Verbindungslinie IV von Punkt 3 zu Punkt 4).

Jetzt ist die Kalibriervorrichtung einsatzbereit, sodass die eigentliche Kalibrierung durchgeführt werden kann.

Zu diesem Zweck kann der Bediener an einem als Steuereinrichtung dienenden Bedienrechner eine Starttaste betätigen (Schritt V), wodurch der Anfang der benutzergeführten Kalibrierung eingeleitet wird.

Die Steuereinrichtung gibt dem Bediener jetzt vor, welche Gewichte er in welcher Reihenfolge auf die Gewichtsaufnahme 7.1 auflegen soll (Schritt VI, Verbindungslinie VI). Die Reihenfolge und die Größe der Gewichte wird durch die in der Steuereinrichtung gespeicherte Software vorgegeben und während des Auflegens überwacht.

Nach Auflegen eines ersten Gewichts schwingt sich das mechanische System ein und es wird ein Punkt zwischen Punkt 4 und Punkt 1 auf der in Fig. 4 gezeigten Kurve erreicht.

Nach Freigabe durch die Steuereinrichtung muss der Bediener das nächste Gewicht auflegen, woraufhin sich das mechanische System auf einem anderen Punkt zwischen Punkt 4 und Punkt 1 einpendelt.

Dabei wird jedes Mal überprüft, wie weit der von der Kraftmessdose 24 gemessene Kraftwert von dem Wert der tatsächlich anliegenden Kraft abweicht. Die tatsächlich anliegende Kraft ergibt sich aus den Gewichten 10.1 auf der Gewichtsaufnahme 7.1 und den vorbekannten Hebelverhältnissen.

Nachfolgend wird von der Steuereinrichtung vorgegeben, die Gewichte wieder abzuheben, wobei weitere Messungen durchgeführt werden können (noch Schritt VI, Verbindungslinie VI). Auf diese Weise wird der Punkt 2 in der Kurve von Fig. 4 erreicht.

Danach gibt die Steuereinrichtung vor, auf der anderen Seite, nämlich auf der Hebeleinrichtung 3 Gewichte aufzulegen bzw. herunterzunehmen, sodass Messpunkte zwischen den Punkten 2 und 3 bzw. 3 und 4 ermittelt werden (Schritt VII, Verbindungslinie VII).

Auf diese Weise können zum Beispiel zehn Messpunkte auf der gesamten, in Fig. 4 gezeigten Hysterese überprüft werden. Dabei wird jeweils der vorhandene Fehler gemessen und dokumentiert.

Überschreitet der Fehler eine vorher festgelegte Größe, muss der Prüfstand neu justiert werden.

Bei einem anderen Kalibrierverfahren besteht die Möglichkeit, nur auf einer Seite der Kalibriervorrichtung die Last zu verändern, wodurch der Bediener nicht die Gewichte von einer Seite zur anderen Seite transportieren muss.

Dazu werden auf die Gewichtsaufnahmen von beiden Hebeleinrichtungen Kalibriergewichte aufgelegt, bis jeweils auf jeder Seite etwa die Hälfte des Nenn-Gewichtswertes erreicht ist. Das System wird danach austariert.

Danach legt der Bediener auf der bevorzugten Seite, zum Beispiel auf der Seite, die einfacher zugänglich ist, weitere Gewichte auf, bis der Nenn-Gewichtswert erreicht ist. Danach kann der Bediener die gesamte Masse auf der Seite abnehmen.

Auf diese Weise wird in gleicher Weise wie bei den oben beschriebenen Kalibrierverfahren der Kraftaufnehmer bis zu seiner Nennlast belastet und entlastet, also gleichermaßen Zug- und Druckkräften ausgesetzt.

## Patentansprüche

1. Kalibriervorrichtung für einen Prüfstand, mit zwei Hebeleinrichtungen (1, 2),
wobei jede Hebeleinrichtung (1, 2) aufweist:
- ein um eine Drehachse (5) verschwenkbares Hebelelement (6);
- eine an einem Ende des Hebelelements (6) vorgesehene Gewichtsaufnahme (7), auf der unterschiedliche Gewichtslasten (10) anbringbar sind und die über eine Drehachse (12) relativ zu dem Hebelelement (6) verschwenkbar ist; und
- eine an einem dem einen Ende bezüglich der Drehachse (5) gegenüberliegenden anderen Ende des Hebelelements (6) vorgesehene Verbindungseinrichtung (8) zum. Verbinden des Hebelelements (6) mit einer Lasteinrichtung (20) des Prüfstands, wobei die Verbindungseinrichtung (8) über eine Drehachse (13) relativ zu dem Hebelelement (6) verschwenkbar ist;
wobei
- bei jeder Hebeleinrichtung (1, 2) die Drehachse (5) des Hebelelements, die Drehachse (12) der Gewichtsaufnahme (7) und die Drehachse (13) der Verbindungseinrichtung (8) in einer gemeinsamen Ebene liegen; und wobei
- die Hebelelemente (6) derart angeordnet sind, dass die Gewichtsaufnahme (7) des einen Hebelelements (6.1) bezüglich einer Mittelebene (11) der Kalibriervorrichtung auf einer Seite angeordnet ist und die Gewichtsaufnahme (7) des anderen Hebelelements (6.2) bezüglich der Mittelebene (11) auf der anderen Seite angeordnet ist.

2. Kalibriervorrichtung nach Anspruch 1, **dadurch gekennzeichnet, dass** die Hebeleinrichtungen (1, 2) im Wesentlichen identisch aufgebaut sowie spiegelsymmetrisch und versetzt zueinander angeordnet sind.

3. Kalibriervorrichtung nach Anspruch 1 oder 2, **dadurch gekennzeichnet, dass** die Hebelelemente (6) zueinander parallel ausrichtbar sind.

4. Kalibriervorrichtung nach einem der Ansprüche 1 bis 3, **dadurch gekennzeichnet, dass** die Hebelelemente (6) jeweils horizontal ausrichtbar sind.

5. Kalibriervorrichtung nach einem der Ansprüche 1 bis 4, **dadurch gekennzeichnet, dass** das eine Ende des Hebelelements (6) weiter von der Drehachse (5) entfernt ist als das andere Ende.

6. Kalibriervorrichtung nach einem der Ansprüche 1 bis 5, **dadurch gekennzeichnet, dass** beide Drehachsen (5) auf einem gemeinsamen Tragrahmen (3) angeordnet sind.

7. Kalibriervorrichtung nach einem der Ansprüche 1 bis 6, **dadurch gekennzeichnet, dass** die Gewichtsaufnahme (7) einen Teller aufweist, auf den Gewichte (10) auflegbar sind.

8. Kalibriervorrichtung nach einem der Ansprüche 1 bis 7, **dadurch gekennzeichnet, dass** die Verbindungseinrichtung (8) ein sich im Wesentlichen senkrecht nach unten erstreckendes stabförmiges Element aufweist.

9. Kalibriervorrichtung nach einem der Ansprüche 1 bis 8, **dadurch gekennzeichnet, dass** die Länge der Verbindungseinrichtung (8) veränderbar ist, um ein horizontales Ausrichten der beiden Hebelelemente (6) zu ermöglichen.

10. Kalibriervorrichtung nach einem der Ansprüche 1 bis 9, **dadurch gekennzeichnet, dass** die Mittelebene (11) der Kalibriervorrichtung mit einer Mittelebene (29) des Prüfstands bei einem Aufsetzen der Kalibriervorrichtung auf den Prüfstand in Überdeckung bringbar ist.

11. Kalibriervorrichtung nach einem der Ansprüche 1 bis 10, **dadurch gekennzeichnet, dass** die Kalibriervorrichtung derart auf dem Prüfstand aufbaubar ist, dass eine Drehachse (21) eines zu der Lasteinrichtung des Prüfstands gehörenden Dynamometers (20) in der Mittelebene (11) der Kalibriervorrichtung liegt.

12. Kalibriervorrichtung nach einem der Ansprüche 1 bis 11, **dadurch gekennzeichnet, dass** die Verbindungseinrichtungen (8) der beiden Hebeleinrichtungen (1, 2) bezüglich der Mittelebene (11) auf verschiedenen Seiten angeordnet sind und mit an dem Dynamometer (20) auf gegenüberliegenden Seiten vorgesehenen Befestigungsmitteln (28) verbindbar sind.

13. Kalibrierverfahren zum Kalibrieren eines Prüfstands mit einer Kalibriervorrichtung nach einem der vorstehenden Ansprüche, mit den Schritten:
a) Durchführen eines Startverfahrens mit den Schritten:
- Anbringen (I) von Gewichten (10.1) auf einer der Gewichtsaufnahmen (7.1) der Kalibriervorrichtung bis zum Erreichen eines vorgegebenen Nenn-Gewichtswertes;
- Entfernen (I) der Gewichte (10.1) von der Gewichtsaufnahme (7.1);
- Anbringen (II) von Gewichten (10.2) auf der anderen Gewichtsaufnahme (7.2) der Kalibriervorrichtung bis zum Erreichen des vorgegebenen Nenn-Gewichtswertes;
- Entfernen (II) der Gewichte (10.2) von der Gewichtsaufnahme (7.2);
- erneutes Anbringen (III) von Gewichten (10.1) auf der einen Gewichtsaufnahme (7.1) bis zum Erreichen des vorgegebenen Nenn-Gewichtswertes;
- Entfernen (III) der Gewichte (10.1) von der Gewichtsaufnahme (7.1);
- erneutes Anbringen (IV) von Gewichten (10.2) auf der anderen Gewichtsaufnahme (7.2) bis zum Erreichen des vorgegebenen Nenn-Gewichtswertes;
- Entfernen (IV) der Gewichte (10.2) von der Gewichtsaufnahme (7.2);
und
b) Durchführen einer Kalibrierung mit den Schritten:
- nacheinander Anbringen und Entfernen (VI) von verschiedenen Gewichten entsprechend einer durch eine Steuereinrichtung vorgegebenen Reihenfolge zum Erzeugen von unterschiedlichen Gewichtslasten auf der einen Gewichtsaufnahme (7.1), währenddessen Messen einer von der Kalibriervorrichtung auf den Prüfstand ausgeübten Last und Vergleichen der gemessenen Last mit der durch die Gewichtslasten vorgegebenen Last;
- nacheinander Anbringen und Entfernen (VII) von verschiedenen Gewichten entsprechend einer durch die Steuereinrichtung vorgegebenen Reihenfolge zum Erzeugen von unterschiedlichen Gewichtslasten auf der anderen Gewichtsaufnahme (7.2), währenddessen Messen einer von der Kalibriervorrichtung auf den Prüfstand ausgeübten Last und Vergleichen der gemessenen Last mit der durch die Gewichtslasten vorgegebenen Last.

14. Kalibrierverfahren zum Kalibrieren eines Prüfstands mit einer Kalibriervorrichtung nach einem der Ansprüche 1 bis 12, mit den Schritten:
a) Durchführen eines Startverfahrens mit den Schritten:
- Anbringen von Gewichten auf beiden Gewichtsaufnahmen (7.1, 7.2) der Kalibriervorrichtung bis zum Erreichen eines vorgegebenen Mittel-Gewichtswertes auf beiden Gewichtsaufnahmen (7.1, 7.2);
- Austarieren der Kalibriervorrichtung
- Hinzufügen weiterer Gewichte auf einer der Gewichtsaufnahmen (7.1) bis zum Erreichen eines vorgegebenen Nenn-Gewichtswertes;
- Entfernen der Gewichte von der einen Gewichtsaufnahme (7.1);
- erneutes Anbringen von Gewichten auf der einen Gewichtsaufnahme (7.1) bis zum Erreichen des vorgegebenen Nenn-Gewichtswertes;
- Entfernen der Gewichte von einen Gewichtsaufnahme (7.1);
und
b) Durchführen einer Kalibrierung mit den Schritten:
- nacheinander Anbringen und Entfernen von verschiedenen Gewichten entsprechend einer durch eine Steuereinrichtung vorgegebenen Reihenfolge zum Erzeugen von unterschiedlichen Gewichtslasten auf der einen Gewichtsaufnahme (7.1), währenddessen Messen einer von der Kalibriervorrichtung auf den Prüfstand ausgeübten Last und Vergleichen der gemessenen Last mit der durch die Gewichtslasten vorgegebenen Last.

## Claims

1. Calibration device for a test rig, with two lever mechanisms (1, 2),
wherein each lever mechanism (1, 2) comprises:
- a lever element (6) capable of swivelling about an axis of rotation (5);
- a load support (7) provided on one end of the lever element (6), on which different weight loads (10) can be placed and which is capable of swivelling relative to the lever element (6) by means of an axis of rotation (12); and
- a connecting mechanism (8) provided the other end of the lever element (6) opposing the one end with respect to the axis of rotation (5) for connecting the lever element (6) to the load mechanism (20) of the test rig, wherein the connecting mechanism (8) is capable of swivelling about an axis of rotation (13) relative to the lever element (6);
wherein
- with each lever mechanism (1, 2), the axis of rotation (5) of the lever element, the axis of rotation (12) of the load support (7) and the axis of rotation (13) of the connecting mechanism (8) are in a common plane; and wherein
- the lever elements (6) are arranged so that the load support (7) of the one lever element (6.1) is positioned to one side in relation to a central plane (11) of the calibration device and the load support (7) of the other lever element (6.2) is positioned on the other side in relation to the central plane (11).

2. Calibration device in accordance with claim 1, **characterised in that** the lever mechanisms (1, 2) are essentially of identical construction and are arranged in mirror symmetry and offset to one another.

3. Calibration device in accordance with claim 1 or 2, **characterised in that** the lever elements (6) can be aligned parallel to one another.

4. Calibration device in accordance with one of the claims 1 to 3, **characterised in that** the lever elements (6) can each be aligned horizontally.

5. Calibration device in accordance with one of the claims 1 to 4, **characterised in that** the one end of the lever element (6) is further away from the axis of rotation (5) than the other end.

6. Calibration device in accordance with one of the claims 1 to 5, **characterised in that** both axes of rotation (5) are arranged on a common support frame (3).

7. Calibration device in accordance with one of the claims 1 to 6, **characterised in that** the load support (7) has a table on which weights (10) can be placed.

8. Calibration device in accordance with one of the claims 1 to 7, **characterised in that** the connecting mechanism (8) comprises a rod-shaped element essentially extending vertically downwards.

9. Calibration device in accordance with one of the claims 1 to 8, **characterised in that** the length of the connecting mechanism (8) can be varied in order to allow the two lever elements (6) to be aligned horizontally.

10. Calibration device in accordance with one of the claims 1 to 9, **characterised in that** the central plane (11) of the calibration device can be brought to cover the central plane (29) of the test rig when placing the calibration device on the test rig.

11. Calibration device in accordance with one of the claims 1 to 10, **characterised in that** the calibration device can be mounted on the test rig so that the axis of rotation (21) of a dynamometer (20) forming part of the load mechanism of the test rig is in the central plane (11) of the calibration device.

12. Calibration device in accordance with one of the claims 1 to 11, **characterised in that** the connecting mechanisms (8) of the two lever mechanisms (1, 2) are arranged on different sides in relation to the central plane (11) and can be attached by fastening means (28) provided on opposite sides on the dynamometer (20).

13. Calibration method for calibrating a test rig with a calibration device in accordance with one of the preceding claims, with the steps:
(a) carrying out a starting procedure with the steps:
- attaching (I) weights (10.1) to one of the load supports (7.1) of the calibration device to obtain a predetermined nominal weight value;
- removing (I) the weights (10.1) from the load support (7.1);
- attaching (II) weights (10.2) to the other load support (7.2) of the calibration device to obtain a predetermined nominal weight value;
- removing (II) the weights (10.2) from the load support (7.2);
- re-attaching (III) weights (10.1) to the one load support (7.1) to obtain the predetermined nominal weight value;
- removing (III) weights (10.1) from the load support (7.1);
- re-attaching (IV) weights (10.2) to the other loads support (7.2) to obtain the predetermined nominal weight value;
- removing (IV) weights (10.2) from the load support (7.2);
and
b) carrying out a calibration with the steps:
- successive attachment and removal (VI) of various weights corresponding to a sequence specified by a control mechanism to produce different weight loads on the one load support (7.1), while measuring a load exerted by the calibration device on the test rig and comparing the measured load with the load specified by the weight loads;
- successive attachment and removal (VII) of various weights corresponding to a sequence specified by a control mechanism to produce different weight loads on the one load support (7.2), while measuring a load exerted by the calibration device on the test rig and comparing the measured load with the load specified by the weight loads.

14. Calibration method for calibrating a test rig with a calibration device in accordance with one of the claims 1 to 12, with the steps:
a) carrying out a starting procedure with the steps:
- attaching weights to both load supports (7.1, 7.2) of the calibration device until a predetermined mean weight value is obtained on both load supports (7.1, 7.2);
- balancing the calibration device
- adding further weights to one of the load supports (7.1) until a predetermined nominal weight value is obtained;
- removing the weights from the load support (7.1);
- re-attaching weights to the one load support (7.1) to obtain the predetermined nominal weight value;
- removing the weights from the load support (7.1);
and
b) carrying out a calibration with the steps:
- successive attachment and removal of various weights corresponding to a sequence specified by a control mechanism to produce different weight loads on the one load support (7.1), while measuring a load exerted by the calibration device on the test rig and comparing the measured load with the load specified by the weight loads.

## Revendications

1. Dispositif d'étalonnage pour un banc d'essai, avec deux dispositifs à levier (1, 2),
étant précisé que chaque dispositif à levier (1, 2) comporte :
- un élément formant levier (6) apte à pivoter sur un axe de rotation (5) ;
- un logement pour poids (7) qui est prévu à une première extrémité de l'élément formant levier (6), sur lequel différents poids (10) peuvent être installés et qui est apte à pivoter par rapport à l'élément formant levier (6) grâce à un axe de rotation (12) ; et
- un dispositif de liaison (8) qui est prévu à une autre extrémité de l'élément formant levier (6), opposée à la première extrémité, par rapport à l'axe de rotation (5), pour relier l'élément formant levier (6) à un dispositif de charge (20) du banc d'essai, étant précisé que le dispositif de liaison (8) est apte à pivoter par rapport à l'élément formant levier (6) grâce à un axe de rotation (13) ;
étant précisé
- que pour chaque dispositif à levier (1, 2), l'axe de rotation (5) de l'élément formant levier, l'axe de rotation (12) du logement pour poids (7) et l'axe de rotation (13) du dispositif de liaison (8) sont situés dans un plan commun ; et
- que les éléments formant levier (6) sont disposés de telle sorte que le logement pour poids (7) du premier élément formant levier (6.1) soit disposé sur un côté, par rapport à un plan médian (11) du dispositif d'étalonnage, et que le logement pour poids (7) de l'autre élément formant levier (6.2) soit disposé de l'autre côté, par rapport au plan médian (11).

2. Dispositif d'étalonnage selon la revendication 1, **caractérisé en ce que** les dispositifs à levier (1, 2) ont globalement la même construction et sont disposés en miroir et de manière décalée l'un par rapport à l'autre.

3. Dispositif d'étalonnage selon la revendication 1 ou 2, **caractérisé en ce que** les éléments formant levier (6) sont aptes à être orientés parallèlement l'un par rapport à l'autre.

4. Dispositif d'étalonnage selon l'une des revendications 1 à 3, **caractérisé en ce que** les éléments formant levier (6) sont aptes à être orientés chacun à l'horizontale.

5. Dispositif d'étalonnage selon l'une des revendications 1 à 4, **caractérisé en ce que** la première extrémité de l'élément formant levier (6) est plus éloignée de l'axe de rotation (5) que son autre extrémité.

6. Dispositif d'étalonnage selon l'une des revendications 1 à 5, **caractérisé en ce que** les deux axes de rotation (5) sont disposés sur un châssis porteur commun (3).

7. Dispositif d'étalonnage selon l'une des revendications 1 à 6, **caractérisé en ce que** le logement pour poids (7) comporte un plateau sur lequel des poids (10) peuvent être posés.

8. Dispositif d'étalonnage selon l'une des revendications 1 à 7, **caractérisé en ce que** le dispositif de liaison (8) comporte un élément en forme de barre qui s'étend globalement à la verticale vers le bas.

9. Dispositif d'étalonnage selon l'une des revendications 1 à 8, **caractérisé en ce que** la longueur du dispositif de liaison (8) est apte à être modifiée afin de permettre une orientation horizontale des deux éléments formant levier (6).

10. Dispositif d'étalonnage selon l'une des revendications 1 à 9, **caractérisé en ce qu'**on peut faire coïncider le plan médian (11) du dispositif d'étalonnage avec un plan médian (29) du banc d'essai quand le dispositif d'étalonnage est posé sur celui-ci.

11. Dispositif d'étalonnage selon l'une des revendications 1 à 10, **caractérisé en ce que** le dispositif d'étalonnage est apte à être monté sur le banc d'essai de telle sorte qu'un axe de rotation (21) d'un dynamomètre (20) faisant partie du dispositif de charge du banc d'essai soit situé dans le plan médian (11) du dispositif d'étalonnage.

12. Dispositif d'étalonnage selon l'une des revendications 1 à 11, **caractérisé en ce que** les dispositifs de liaison (8) des deux dispositifs à levier (1, 2) sont disposés sur des côtés différents, par rapport au plan médian (11), et sont aptes à être reliés à des moyens de fixation (28) prévus sur des côtés opposés, sur le dynamomètre (20).

13. Procédé d'étalonnage pour étalonner un banc d'essai avec un dispositif d'étalonnage selon l'une des revendications précédentes, avec les étapes suivantes :
a) exécution d'une opération de démarrage avec les étapes qui consistent :
- à monter (I) des poids (10.1) sur l'un des logements pour poids (7.1) du dispositif d'étalonnage jusqu'à ce qu'une valeur de poids nominale prédéfinie soit atteinte ;
- à enlever (I) les poids (10.1) du logement pour poids (7.1) ;
- à monter (II) des poids (10.2) sur l'autre logement pour poids (7.2) du dispositif d'étalonnage jusqu'à ce que la valeur de poids nominale prédéfinie soit atteinte ;
- à enlever (II) les poids (10.2) du logement pour poids (7.2) ;
- à monter à nouveau (III) des poids (10.1) sur le logement pour poids (7.1) jusqu'à ce que la valeur de poids nominale prédéfinie soit atteinte ;
- à enlever (III) les poids (10.1) du logement pour poids (7.1) ;
- à monter à nouveau (IV) des poids (10.2) sur l'autre logement pour poids (7.2) jusqu'à ce que la valeur de poids nominale prédéfinie soit atteinte ;
- à enlever (IV) les poids (10.2) du logement pour poids (7.2) ;
et
b) exécution d'un étalonnage avec les étapes qui consistent :
- à monter et enlever (VI) successivement différents poids suivant un ordre prédéfini par un dispositif de commande, pour produire des charges de poids différentes sur un logement pour poids (7.1), à mesurer pendant ce temps une charge exercée par le dispositif d'étalonnage sur le banc d'essai, et à comparer la charge mesurée à la charge prédéfinie par les charges de poids ;
- à monter et enlever (VII) successivement différents poids suivant un ordre prédéfini par le dispositif de commande, pour produire des charges de poids différentes sur l'autre logement pour poids (7.2), à mesurer pendant ce temps une charge exercée par le dispositif d'étalonnage sur le banc d'essai, et à comparer la charge mesurée à la charge prédéfinie par les charges de poids.

14. Procédé d'étalonnage pour étalonner un banc d'essai avec un dispositif d'étalonnage selon l'une des revendications 1 à 12, avec les étapes suivantes :
a) exécution d'une opération de démarrage avec les étapes qui consistent :
- à monter des poids sur les deux logements pour poids (7.1, 7.2) du dispositif d'étalonnage jusqu'à ce qu'une valeur de poids moyenne prédéfinie soit atteinte sur les deux logements pour poids (7.1, 7.2) ;
- à tarer le dispositif d'étalonnage,
- à ajouter d'autres poids sur l'un des logements pour poids (7.1) jusqu'à ce qu'une valeur de poids nominale prédéfinie soit atteinte ;
- à enlever les poids d'un logement pour poids (7.1) ;
- à monter à nouveau des poids sur le logement pour poids (7.1) jusqu'à ce que la valeur de poids nominale prédéfinie soit atteinte ;
- à enlever les poids du logement pour poids (7.1) ; et
b) exécution d'un étalonnage avec les étapes qui consistent :
- à monter et enlever successivement différents poids suivant un ordre prédéfini par un dispositif de commande, pour produire des charges de poids différentes sur un logement pour poids (7.1), à mesurer pendant ce temps une charge exercée par le dispositif d'étalonnage sur le banc d'essai, et à comparer la charge mesurée à la charge prédéfinie par les charges de poids.
